(19)

Europäisches Patentamt

European Patent Office

Office européen des brevets

(11) **EP 4 578 719 A1**

(12) **EUROPEAN PATENT APPLICATION**

(43) Date of publication:
**02.07.2025 Bulletin 2025/27**

(21) Application number: **24222027.5**

(22) Date of filing: **20.12.2024**

(51) International Patent Classification (IPC):
**B60L 53/53** (2019.01)   **H02J 7/00** (2006.01)
**H02J 7/34** (2006.01)   **H02J 7/02** (2016.01)

(52) Cooperative Patent Classification (CPC):
**H02J 7/34; B60L 53/53; H02J 7/0013; H02J 7/02;**
**H02J 7/342;** H02J 2300/20; H02J 2310/48

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **22.12.2023  US 202363613840 P**

(71) Applicant: **Delta Electronics, Inc.**
**Taoyuan City 333 (TW)**

(72) Inventors:
• **CHEN, Chin-Ming**
  **333 Taoyuan City (TW)**
• **WU, Chun-Chieh**
  **333 Taoyuan City (TW)**

(74) Representative: **Riccardi, Elisa et al**
**Barzanò & Zanardo S.p.A.**
**Via Borgonuovo, 10**
**20121 Milano (IT)**

(54) **DC COUPLING POWER SYSTEM AND CONTROL METHOD THEREOF**

(57)    A DC coupling power system receives an AC voltage from an AC power source and includes an AC/DC converter, a battery module, a DC coupled charger and a control unit. The AC/DC converter is configured to convert the AC voltage into a first DC voltage, and provide the first DC voltage and a supply power to a DC bus. The battery module is directly connected to the DC bus. The DC coupled charger receives the first DC voltage and provides a load power to charge a load. The control unit is configured to determine an energy of the battery module and compare the load power and a contracted demand capacity to set the AC/DC converter in one of a plurality of modes.

Fig. 1

EP 4 578 719 A1

**Description**

**BACKGROUND**

Field of Invention

This disclosure relates to a DC coupling power system and a control method thereof, and in particular to a DC coupling power system with a charge-discharge battery module and a control method thereof.

Description of Related Art

In the well-known technology, the DC coupling power system needs to convert the AC power from the AC power source into DC power through an AC/DC converter, and then further convert the DC power through a plurality of DC/DC converters to provide, to provide it to battery modules for energy storage and DC coupled chargers for charging electric vehicles.

It is known that installing DC/DC converters in a DC coupling power system may increase the operation power of the system, the circuit required for the operation system and the coordinated control logic between multiple DC/DC converters may also become complicated, the system cost and the equipment installation space requirements may also increase, and the DC/DC converters may cause energy loss when performing the power conversion. The problems mentioned above are important issues that people having ordinary in the art must deal with when improving DC coupling power systems.

**SUMMARY**

The present disclosure provides a DC coupling power system. The DC coupling power system configured to receive an AC voltage from an AC power source, and includes an AC/DC converter, a battery module, a DC coupled charger and a control unit. The AC/DC converter is configured to convert the AC voltage into a first DC voltage and provide the first DC voltage and a supply power to a DC bus. The battery module is directly connected to the DC bus. The DC coupled charger is coupled to the DC bus, receives the first DC voltage and provides a load power to power a load. The control unit is coupled to the AC/DC converter, the battery module and the DC coupled charger, and is configured to determine an energy of the battery module and compare the load power with a contracted demand capacity to set the AC/DC converter in one of a constant voltage mode, a constant power mode and a constant voltage- constant power mode.

The present disclosure provides a control method of a DC coupling power system. The control method comprising: receiving an AC voltage from an AC power source; by an AC/DC converter, converting the AC voltage into a first DC voltage, and providing the first DC voltage and a supply power to a DC bus; by a DC coupled charger, receiving the first DC voltage from the DC bus and providing a load power to power a load; and by a control unit, determining an energy of a battery module, and comparing the load power with a contracted demand capacity to set the AC/DC converter in one of a constant voltage mode, a constant power mode and a constant voltage- constant power mode.

In summary, since the DC coupling power system of the present disclosure does not have an additional DC/DC converter, the DC coupling power system has many technical advantages, such as saving operation power and circuit required for the operation, simplifying system control logic, avoiding the energy loss rate when the DC/DC converter performs power conversion, and saving system costs and space occupied by the equipment.

**BRIEF DESCRIPTION OF THE DRAWINGS**

Fig. 1 is a block diagram of a DC coupling power system in accordance with some embodiments of the present disclosure.

Fig. 2 is a schematic diagram of the voltage-energy curve of the battery module in accordance with the embodiment of Fig. 1.

Fig. 3 is a flow chart diagram of the control method of the DC coupling power system in accordance with the embodiment of Fig. 1.

Fig. 4 is a timing diagram of the DC coupling power system in accordance with the embodiments of Fig. 1.

Fig. 5 is a block diagram of a DC coupling power system in accordance with another embodiment of the present disclosure.

Fig. 6 is a block diagram of a DC coupling power system in accordance with another embodiment of the present disclosure.

Fig. 7 is a block diagram of a DC coupling power system in accordance with another embodiment of the present disclosure.

Fig. 8 is a flow chart diagram of the control method of the DC coupling power system in accordance with the embodiment of Fig. 1.

Fig. 9 is a block diagram of a DC coupling power system in accordance with the related art.

## DETAILED DESCRIPTION

The embodiments are described in detail below with reference to the appended drawings to better understand the aspects of the present disclosure. However, the provided embodiments are not intended to limit the scope of the disclosure, and the description of the structural operation is not intended to limit the order in which they are performed. Any device that has been recombined by components and produces an equivalent function is within the scope covered by the present disclosure.

The terms used in the entire specification and the scope of the patent application, unless otherwise specified, generally have the ordinary meaning of each term used in the field, the content disclosed herein, and the particular content.

The terms "coupled" or "connected" as used herein may mean that two or more elements are directly in physical or electrical contact, or are indirectly in physical or electrical contact with each other. It can also mean that two or more elements interact with each other.

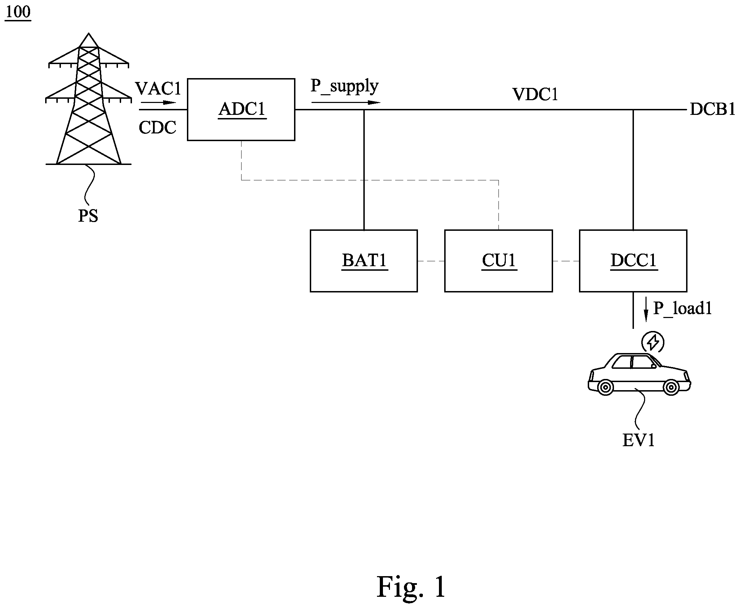

Referring to Fig. 1, Fig. 1 is a block diagram of a DC coupling power system 100 in accordance with some embodiments of the present disclosure. In the embodiment of FIG. 1, the DC coupling power system 100 includes an AC/DC converter ADC1 , a battery module BAT1 , a DC coupled charger DCC1 and a control unit CU1.

As shown in Fig. 1, the AC power source PS may be a power supply device of a conventional power grid (i.e., mains power or utility power), and the AC power source PS may provide the AC voltage VAC1 to the AC/DC converter ADC1 of the DC coupling power system 100.

In some circumstances, a supply power of the AC power source PS may be limited by a contracted demand capacity CDC. The contracted demand capacity CDC is a preset power value that can be negotiated in a contract between the grid operator and the owner of the DC coupling power system 100 in the present disclosure. When the DC coupling power system 100 requires more input power than the contracted demand capacity CDC, the owner of the DC coupling power system 100 is required to pay a demand penalty according to the demand contract.

The AC/DC converter ADC1 receives the AC voltage VAC1. The AC/DC converter ADC1 may convert the AC voltage VAC1 into a DC voltage VDC1, and provide the DC voltage VDC1 and supply power P_supply on a DC bus DCB1.

The battery module BAT1 is directly connected to the DC bus DCB1. It is noticed that the battery module BAT1 does not include any DC/DC converter. Since the battery module BAT1 is directly connected to the DC bus DCB1, the battery module BAT1 directly receives the DC voltage VDC1 from the AC/DC converter ADC1, and charges or discharges the battery module BAT1 by adjusting voltage level of the DC voltage VDC1.

In addition, there is no DC/DC converter between the battery module BAT1 and the DC bus DCB1. There is no DC/DC converter between the battery module BAT1 and the AC/DC converter ADC1, either.

The DC coupled charger DCC1 is coupled to the DC bus DCB1. The DC coupled charger DCC1 may receive the DC voltage VDC1 and provide a load power P_load1 to charge the electric vehicle EV1.

The load power P_load1 may change according to practical demands. For example, when the DC coupled charger DCC1 connects to the electric vehicle EV1 and multiple electric vehicles (not shown in Fig. 1) at the same time or when the electric vehicle EV1 needs to be fast charged with a high power demand, the load power P_load1 will increase. When the multiple electric vehicles complete charging and disconnect, the load power P_load1 will decrease.

The control unit CU1 is coupled to the AC/DC converter ADC1, the battery module BAT1 and the DC coupled charger DCC1. The control unit CU1 is configured to determine the energy of the battery module BAT1, and compare the load power P_load1 and the contracted demand capacity CDC, so as to set the AC/DC converter ADC1 to operate in a constant voltage mode CV, a constant power mode CP or a constant voltage-constant power mode CVP.

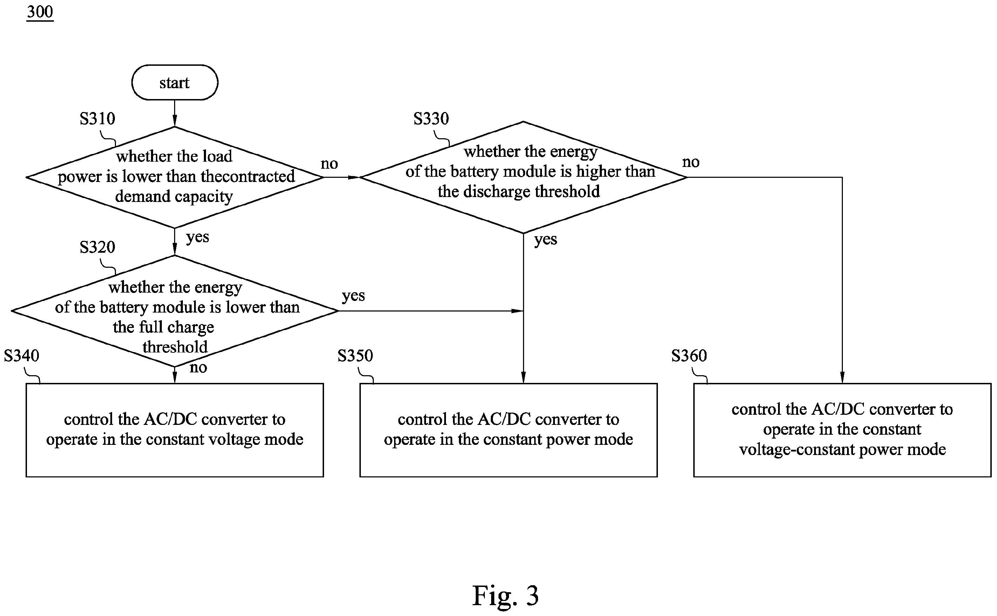

In the constant voltage mode CV, the control unit CU1 controls the AC/DC converter ADC1, so that the voltage level of the DC voltage VDC1 on the DC bus DCB1 is maintained at a voltage level LV_FC. In the constant power mode CP, the control unit CU1 controls the AC/DC converter ADC1, so that the supply power P_supply is equal to the contracted demand capacity CDC. In the constant voltage-constant power mode CVP, the control unit CU1 controls the AC/DC converter ADC1, so that the voltage level of the DC voltage VDC1 on the DC bus DCB1 is maintained at a voltage level LV_COF. As for how to decide whether AC/DC converter ADC1 should operate in the constant voltage mode CV, the constant power mode CP or the constant voltage-constant power mode CVP, the determination method is shown in the control method 300 shown in Fig. 3 below.

Since the DC coupling power system 100 does not have an additional DC/DC converter, the DC coupling power system 100 has many technical advantages, such as saving operation power and circuit required for the operation, simplifying system control logic, avoiding the energy loss rate when the DC/DC converter performs power conversion, and saving system costs and space occupied by the equipment.

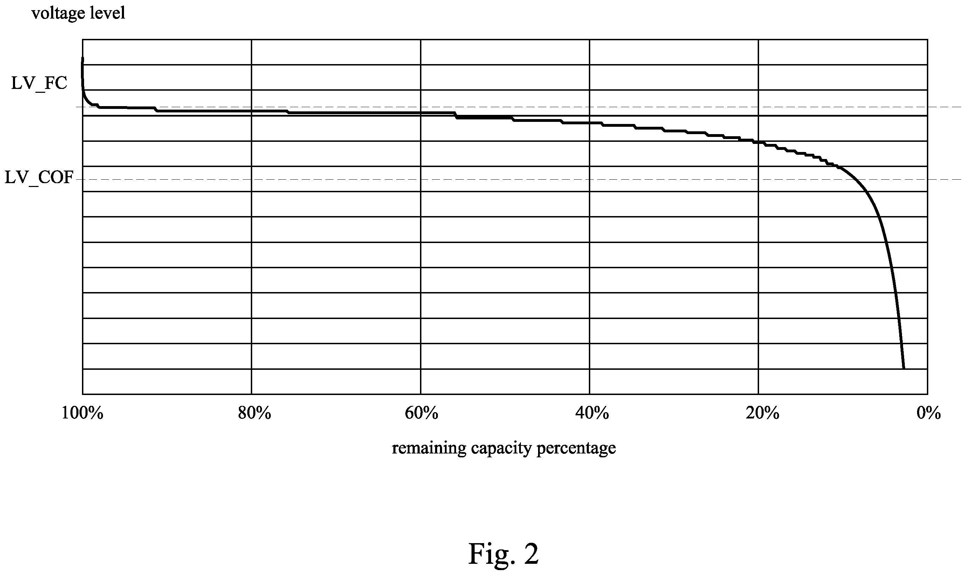

Referring to Fig. 2, Fig. 2 is a schematic diagram of the voltage-SOC curve of the battery module BAT1 in accordance with the embodiment of Fig. 1. The Y-axis in Fig. 2 represents the voltage level of the battery module BAT1, and the X-axis represents the remaining capacity percentage of the battery module BAT1. The remaining capacity percentage can represent the remaining capacity of the battery module BAT1 relative to its rated capacity and can be represented as State of Charge (SOC). In other embodiments, the scale value of the X-axis can be defined by the depth of discharge (DOD) of the battery module BAT1. For example, the scale value of the X-axis may be from 0 to 100% from the left to the right in Fig. 2.

In this embodiment, the battery module BAT1 may include a lithium iron phosphate (LFP) battery. The voltage level of the battery module BAT1 may change as the battery capacity changes. While the battery module BAT1 discharges more, the energy remained in the battery module BAT1 will decrease, and the voltage level of the battery module BAT1 will drop; on the contrary, while the battery module BAT1 discharges lower, the energy remained in the battery module BAT1 will increase, and the voltage level of the battery module BAT1 will be higher.

It is noticed that from the voltage-energy curve in Fig. 2, when the battery module BAT1 is close to 100% of the remaining capacity percentage (complete charging) and 0% of the remaining capacity percentage (complete discharging), the voltage level of battery module BAT1 will undergo relatively drastic changes (which is usually called "steep zone"). If the voltage level of the DC voltage VDC1 operates in the drastic change zone, it may be difficult to control the charging and discharging voltage of the battery, and the amount of energy actually provided in these drastic change zones may be relatively minimal. In order to avoid the circumstances mentioned above, the voltage level of the DC voltage VDC1 may be controlled between the voltage level LV_FC and the voltage level LV_COF, as shown in the following formula <1>:

$$LV\_FC \geq VDC1 \geq LV\_COF \qquad \text{formula <1>}$$

Corresponding to the formula <1>, the voltage level of the battery module BAT1 and the operating voltage range of the DC voltage VDC1 can be limited between the voltage level LV_FC and the voltage level LV_COF.

Referring to Figs. 1 and 3, Fig. 3 is a flow chart diagram of the control method 300 of the DC coupling power system in accordance with the embodiment of Fig. 1. Specifically, in the control method 300, the control unit CU1 in Fig. 1 is used to detect the energy of the battery module BAT1 and the load power P_load1, and to determine the supply power P_supply output by the AC/DC converter ADC1 and determine the DC Voltage VDC1 on the DC bus DCB1.

In step S310, the control unit CU1 may determine whether the load power P_load1 is lower than the contracted demand capacity CDC. When the load power P_load1 is lower than the contracted demand capacity CDC, step S320 is executed; when the load power P_load1 is higher than or equal to the contracted demand capacity CDC, step S330 is executed.

In step S320, the control unit CU1 may determine whether the energy of the battery module BAT1 is lower than the full charge threshold (that is, whether the energy of the battery module BAT1 reaches the remaining capacity percentage corresponding to the voltage level LV_FC in Fig. 2). When the energy of the battery module BAT1 reaches the full charge threshold, step S340 is executed; when the energy of the battery module BAT1 is lower than the full charge threshold, step S350 is executed.

In step S330, the control unit CU1 may determine whether the energy of the battery module BAT1 is higher than the discharge threshold (that is, whether the energy of the battery module BAT1 reaches the remaining capacity percentage corresponding to the voltage level LV_COF in Fig. 2). When the energy of the battery module BAT1 is higher than the discharge threshold, step S350 is executed; when the energy of the battery module BAT1 reaches the discharge threshold, step S360 is executed.

In step S340, the control unit CU1 may control the AC/DC converter ADC1 to operate in the constant voltage mode CV. In the constant voltage mode CV, the DC voltage VDC1 is equal to the voltage level LV_FC. The supply power P_supply can be equal to the load power P_load1, and changes with the load power P_load1. Since the energy of the battery module BAT1 reaches to the full charge threshold, it means that the battery module BAT1 has completed charging, the battery module BAT1 is neither charging nor discharging.

In step S350, the control unit CU1 may control the AC/DC converter ADC1 to operate in the constant power mode

**EP 4 578 719 A1**

CP. In the constant power mode CP, the supply power P_supply is fixed and can be set to be lower than or equal to the contracted demand capacity CDC to avoid over-contract penalties. Due to the limitation of the supply power P_supply, the AC/DC converter ADC1 can adjust the voltage level of the DC voltage VDC1 according to the load current, so that the battery module BAT1 can naturally be charged or discharge due to changes of the voltage level of the DC voltage VDC1.

In the constant power mode CP, if the load power P_load1 is lower than the contracted demand capacity CDC and the energy of the battery module BAT1 is lower than the full charge threshold, the supply power P_supply can provide the load power P_load1 required by the electric vehicle EV1 and the charging power required by the battery module BAT1 at the same time. Since the AC/DC converter ADC1 operates in the constant power mode CP, its supply power P_supply is fixed. Therefore, when P_load1 decreases or the battery module BAT1 gradually becomes full to make the overall load current gradually decreases, the voltage level of the DC voltage VDC1 also gradually increases correspondingly. The charging power required by the battery module BAT1 can be equal to the difference of the contracted demand capacity CDC minus the load power P_load1.

In the constant power mode CP, if the load power P_load1 is higher than or equal to the contracted demand capacity CDC and the energy of the battery module BAT1 is higher than the discharge threshold, the AC/DC converter ADC1 will decrease the voltage level of the DC voltage VDC1 due to the increase in the load current (in this way, constant power output can be achieved), thus making the battery module BAT1 naturally discharge to the DC bus DCB1. The load power P_load1 required by the electric vehicle EV1 may be equal to the sum of the discharge power of the battery module BAT1 and the contracted demand capacity CDC.

In step S360, the control unit CU1 may control the AC/DC converter ADC1 to operate in the constant voltage-constant power mode CVP. In the constant voltage-constant power mode CVP, the DC voltage VDC1 is maintained at the voltage level LV_COF, so that the battery module BAT1 cannot discharge externally. The supply power P_supply of the AC/DC converter ADC1 is the contracted demand capacity CDC, it means that the DC bus DCB1 can only provide the contracted demand capacity CDC which is smaller than the load power P_load1 to the DC coupled charger DCC1. In this circumstance, the DC coupled charger DCC1 may enter a load reduction mode, and the DC coupled charger DCC1 may charge the electric vehicle EV1 at a lower charging speed.

It is noticed that as the load power P_load1 and the energy of the battery module BAT1 change, the control unit CU1 can dynamically adjust the operation mode of the AC/DC converter ADC1.

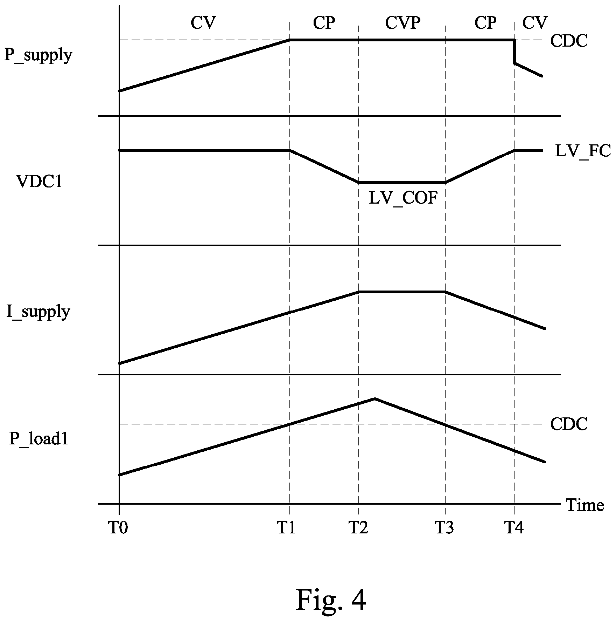

Referring to Figs. 1, 3 and 4, Fig. 4 is a timing diagram of the DC coupling power system 100 in accordance with the embodiments of Fig. 1. As shown in Fig. 4, the operation of switching different modes of the AC/DC converter ADC1 in the control method 300 of Fig. 3 can be clearly understood.

Between a time point T0 and a time point T1, the load power P_load1 is lower than the contracted demand capacity CDC, and the AC/DC converter ADC1 operates in the constant voltage mode CV. During this period, the DC voltage VDC1 is equal to the voltage level LV_FC. The supply power P_supply is equal to the load power P_load1, and the supply current I_supply of the AC/DC converter ADC1 increases with the supply power P_supply and the load power P_load1. The energy of the battery module BAT1 is equal to the full charge threshold, and the battery module BAT1 is neither charging nor discharging.

Between the time point T1 and a time point T2, the load power P_load1 is higher than the contracted demand capacity CDC, and the AC/DC converter ADC1 operates in the constant power mode CP. During this period, the supply power P_supply is fixed at the contracted demand capacity CDC, and the supply current I_supply of the AC/DC converter ADC1 increases with the load power P_load1. Since the supply power P_supply is fixed and the supply current I_supply increases, the DC voltage VDC1 decreases as time goes by. Due to the drop of the DC voltage VDC1, the battery module BAT1 naturally continues to discharge DC bus DCB1.

Between the time point T2 and a time point T3, the load power P_load1 is higher than the contracted demand capacity CDC, and the energy of the battery module BAT1 reaches the discharge threshold, and the AC/DC converter ADC1 operates in the constant voltage-constant power mode CVP. During this period, the supply power P_supply is equal to the contracted demand capacity CDC, the DC voltage VDC1 is equal to the voltage level LV_COF, the supply current I_supply of the AC/DC converter ADC1 does not change, and the battery module BAT1 stops discharging.

Between the time point T3 and a time point T4, the load power P_load1 is lower than the contracted power capacity CDC, and the energy of the battery module BAT1 does not reach the full charge threshold, and the AC/DC converter ADC1 operates in the constant power mode CP. During this period, the supply power P_supply is equal to the contract power capacity CDC, and the supply current I_supply decreases with the load power P_load1. Since the supply power P_supply is fixed and the supply current I_supply decreases, the DC voltage VDC1 increases as time goes by. Due to the increase of the DC voltage VDC1, the battery module BAT1 naturally continues to be charged.

After the time point T4, the load power P_load1 is lower than the contract power capacity CDC, the energy of the battery module BAT1 reaches the full charge threshold, and the AC/DC converter ADC1 operates in the constant voltage mode CV. During this period, the DC voltage VDC1 is equal to the voltage level LV_FC, the supply power P_supply is equal to the load power P_load1, and the supply current I_supply of the AC/DC converter ADC1 decreases with the supply power P_supply and the load power P_load1.

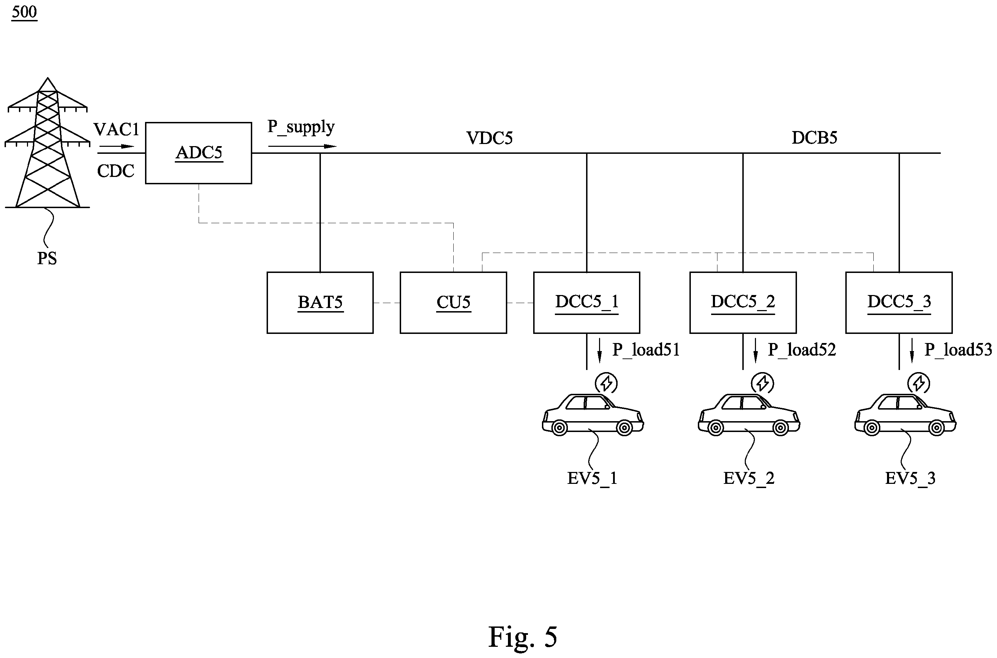

Referring to Fig. 5, Fig. 5 is a block diagram of a DC coupling power system 500 in accordance with another embodiment of the present disclosure. As shown in Fig. 1, the DC coupling power system 100 includes a single DC coupled charger DCC1 and the DC coupling power system 100 is connected to a single electric vehicle EV1. In practical applications, DC coupling power systems are not limited to including one DC-coupled charger. The DC coupling power system 500 includes an AC/DC converter ADC5, a battery module BAT5, and a plurality of DC coupled chargers (i.e., DC coupled chargers DCC5_1, DCC5_2, DCC5_3).

AC/DC converter ADC5 can convert an AC voltage VAC5 into an DC voltage VDC5, and provide the DC voltage VDC5 and the supply power P_supply to a DC bus DCB5. The battery module BAT5 is directly connected to the DC bus DCB5.

Each of the DC coupled chargers DCC5_1~DCC5_3 is coupled to the DC bus DCB5, and each receives the DC voltage VDC1 and provides load powers P_load51, P_load52, and P_load53 to charge the electric vehicles EV5_1, EV5_2, and EV5_3, respectively.

In this embodiment, the control unit CU5 can control the AC/DC converter ADC5 to operate in different modes as the total load power changes according to the supply power P_supply provided by the AC/DC converter ADC5. The total load power in this embodiment is the sum of load powers P_load51, P_load52, and P_load53.

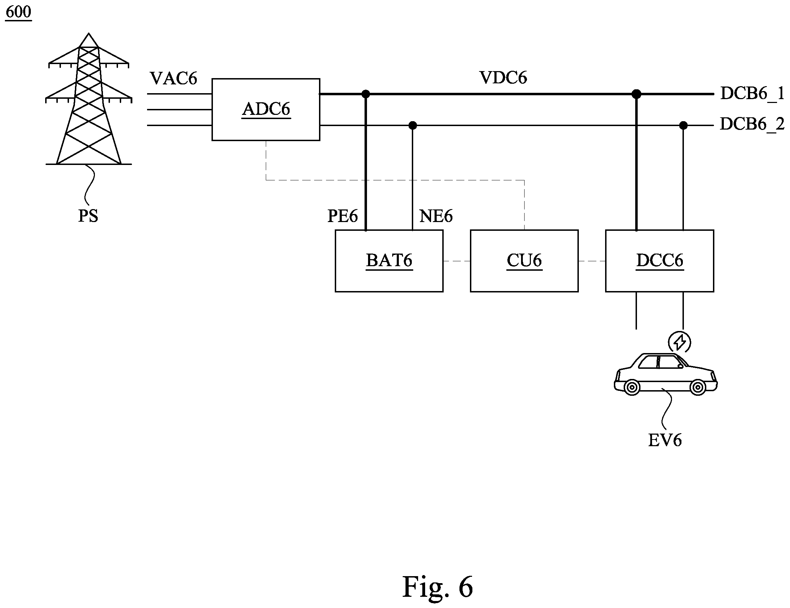

Referring to Fig. 6, Fig. 6 is a block diagram of a DC coupling power system 600 in accordance with another embodiment of the present disclosure.

In this embodiment, the AC voltage VAC6 is a three-phase AC voltage from the AC power source PS. An AC/DC converter ADC6 can receive an AC voltage VAC6, convert the AC voltage VAC6 into a DC voltage VDC6, and provide the DC voltage VDC6 and the supply power P_supply to DC buses DCB6_1 and DCB6_2. The DC bus DCB6_1 can be configured to provide a positive voltage, and the DC bus DCB6_2 can be configured to provide a negative voltage, and the two can form a loop.

A control unit CU6 is coupled to the AC/DC converter ADC6 and the battery module BAT6. A positive electrode PE6 and a negative electrode NE6 of the battery module BAT6 are directly connected to the DC buses DCB6_1 and DCB6_2, respectively. The input terminal of the DC coupled charger DCC6 has two electrodes, which can also be connected to the DC bus DCB6_1 and DCB6_2, respectively. The DC coupled charger DCC6 can charge the electric vehicle EV6.

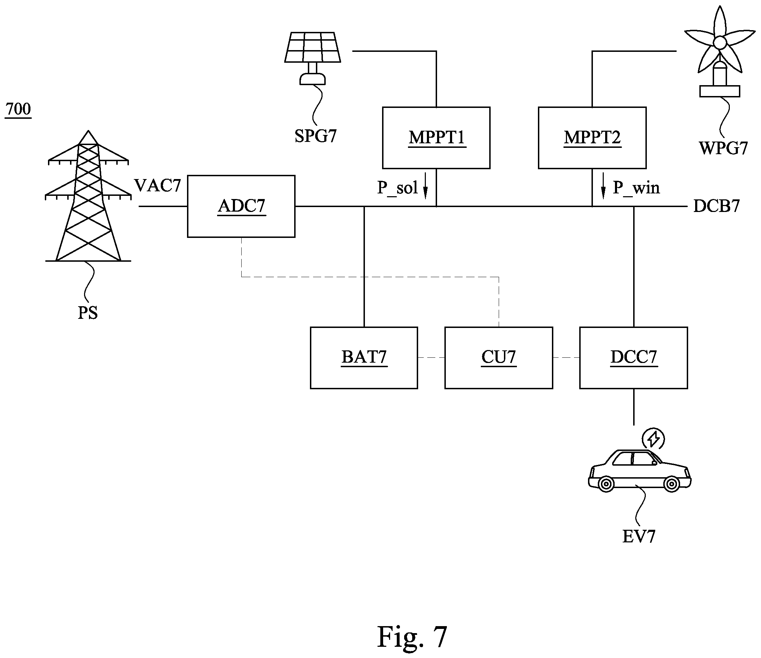

Referring to Fig. 7, Fig. 7 is a block diagram of a DC coupling power system 700 in accordance with another embodiment of the present disclosure. The configuration of the DC coupling power system 700 can correspond to the DC coupling power system 100 of Fig. 1. The difference between the two is that the embodiment in Fig. 7 further integrates the solar power generation system SPG7 and the wind-force power generation system WPG7 into the DC coupling power system 700.

The AC/DC converter ADC7 in Fig. 7 can receive an AC voltage VAC7 from the AC power source PS and be coupled to a DC bus DCB7. A battery module BAT7 is directly connected to the DC bus DCB7. A DC coupled charger DCC7 is coupled to the DC bus DCB7. A control unit CU7 is coupled to an AC/DC converter ADC7 and the battery module BAT7.

In this embodiment, the solar panels of the solar power generation system SPG7 can be coupled to the DC bus DCB7 through a maximum power point tracking unit MPPT1 and provide a solar power P_sol. The wind turbine of the wind-force power generation system WPG7 is coupled to the DC bus DCB7 through a maximum power point tracking unit MPPT2 and provides a wind power P_win. The maximum power point tracking units MPPT1 and MPPT2 both have the function of DC/DC converters.

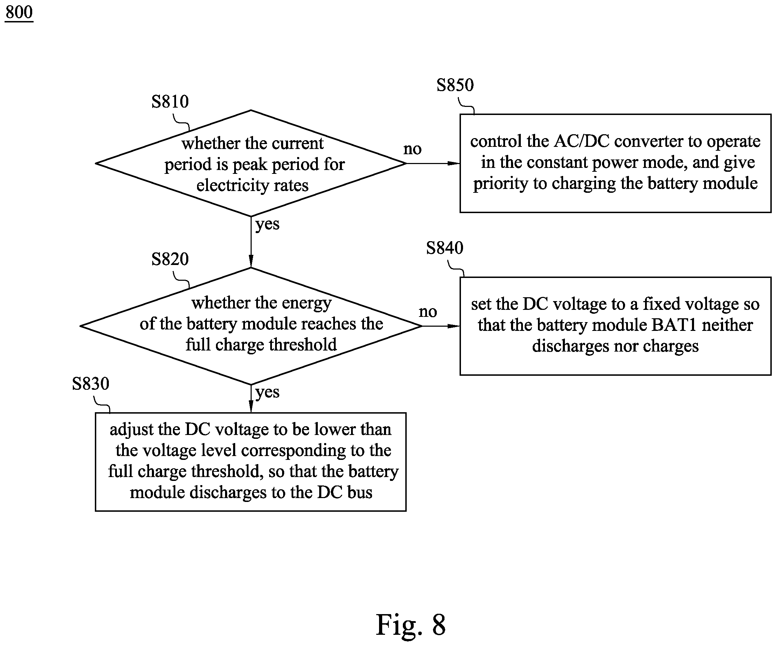

Referring to Figs. 1 and 8, Fig. 8 is a flow chart diagram of the control method 800 of the DC coupling power system 100 in accordance with the embodiment of Fig. 1. The control method 800 is a control method based on time for saving electricity fees generated by the DC coupled power system 100.

Electric power companies usually use a time-of-use (TOU) model to charge electricity bills. The time-of-use model means that the electric power company divides the day into different periods, such as peak hours, normal hours and off-peak hours. Electricity rates are different for different time periods. In general, the peak hours correspond to the highest electricity price, and the off-peak hours correspond to the lowest electricity price. In the control method 800 of Fig. 8, the battery module BAT1 can store electricity at the lowest electricity price during off-peak hours, and then preferentially output the electricity stored in the battery module BAT1 during peak hours when electricity prices are higher.

In step S810, the DC coupling power system 100 may determine whether the current period is peak period for electricity rates. If the current period is peak period, step S820 is executed; if the current period is off-peak period, step S850 is executed.

In step S820, the control unit CU1 may determine whether the energy of the battery module BAT1 reaches the full charge threshold (that is, whether the battery module BAT1 is fully charging). If the energy of the battery module BAT1 reaches the full charge threshold, step S830 is executed; if the energy of the battery module BAT1 does not reach the full charge threshold, step S840 is executed.

In step S830, the control unit CU1 may adjust the DC voltage VDC1 to be lower than the voltage level LV_FC corresponding to the full charge threshold, so that the battery module BAT1 discharges to the DC bus DCB1. As the result, the power consumption from the AC power source PS during peak hours can be reduced, thereby electricity costs during peak hours can be lower.

In step S840, the control unit CU1 may set the DC voltage VDC1 to a fixed voltage so that the battery module BAT1 neither discharges nor is charged, that is, not charging the battery during peak hours. The fixed voltage may be the voltage level of the DC voltage VDC1 while step S840 started to execute.

In step S850, the control unit CU1 may control the AC/DC converter ADC1 to operate in the constant power mode CP, and give priority to charging the battery module BAT1, that is, charging the battery during non-peak periods. It is noticed that during the charging process of the battery module BAT1, the DC voltage VDC1 can gradually increase to the voltage level LV_FC, so that the battery module BAT1 is charged according to the voltage level change of the DC voltage VDC1 during the off-peak period.

In summary, by the control method 800 in Fig. 8, the electricity costs of the DC coupling power system 100 can be further optimized.

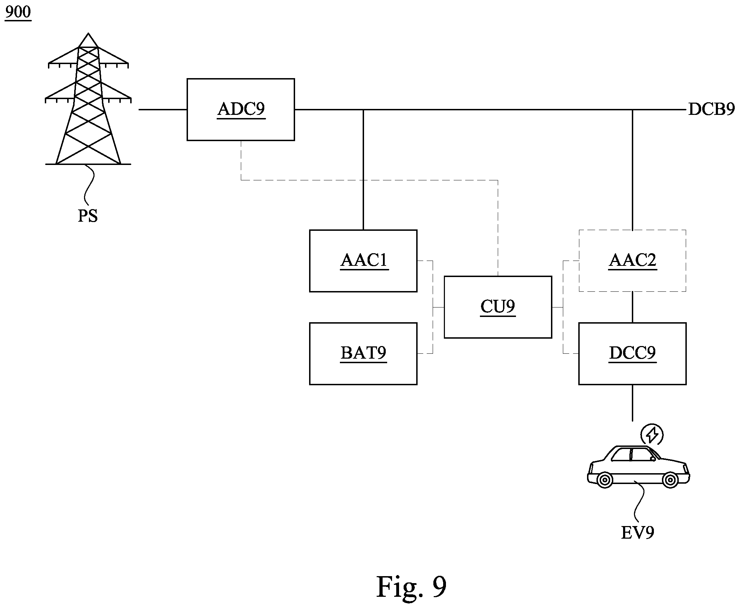

Referring to Figs. 1 and 9, Fig. 9 is a block diagram of a DC coupling power system 900 in accordance with the related art. The DC coupling power system 900 is a related art of the DC coupling power system 100 in Fig. 1. The DC coupling power system 900 includes an AC/DC converter ADC9, a battery module BAT9, a DC coupled charger DCC9, a control unit CU9, and DC/DC converters AAC1 and AAC2.

The AC/DC converter ADC9 is coupled to the AC power source PS and a DC bus DCB9. The battery module BAT9 is coupled to a DC bus DCB9 through the DC/DC converter AAC1. The DC coupled charger DCC9 is coupled to the DC bus DCB9 through the DC/DC converter AAC2. The control unit CU9 is coupled to the AC/DC converter ADC1, the battery module BAT1, the DC coupled charger DCC9, and the DC/DC converters AAC1 and AAC2.

In the DC coupling power system 900, when the battery module BAT9 is charging or discharging, the control unit CU9 needs to control the DC/DC converter AAC1, and let the DC/DC converter AAC1 to deliver energy. When the DC coupled charger DCC9 charges the electric vehicle EV9, it also needs the DC/DC converter AAC2 to obtain energy from the DC bus DCB9.

Referring to Fig. 1, the battery module BAT1 of the DC coupling power system 100 is directly connected to the DC bus DCB1, and the battery module BAT1 is charged or discharged by adjusting the voltage level of the DC voltage VDC1 without using DC/DC converter. In addition, there is no DC/DC converter between the DC coupled charger DCC1 and the DC bus DCB1 of the DC coupled power system 100. Instead, the DC bus DCB1 directly provides energy, letting the DC coupled charger DCC1 to provide the load power P_load1 to charge the electric vehicle EV1.

Compared with the related art, the DC coupling power system in the present disclosure has many technical advantages, such as saving operation power and circuit required for the operation, simplifying system control logic, avoiding the energy loss rate when the DC/DC converter performs power conversion, and saving system costs and space occupied by the equipment.

Although the present disclosure has been described in considerable detail with reference to certain embodiments thereof, other embodiments are possible. Therefore, the spirit and scope of the appended claims should not be limited to the description of the embodiments contained herein. It will be apparent to those skilled in the art that various modifications and variations can be made to the structure of the present disclosure without departing from the scope or spirit of the invention. In view of the foregoing, it is intended that the present invention cover modifications and variations of this invention provided they fall within the scope of the following claims.

**Claims**

1. A DC coupling power system (100, 500, 600, 700) configured to receive an AC voltage (VAC1) from an AC power source (PS), and **characterized by** comprising:

   an AC/DC converter (ADC1, ADC5, ADC6, ADC7), configured to convert the AC voltage into a first DC voltage (VDC1, VDC5, VDC6, VDC7), and provide the first DC voltage and a supply power (P_supply) to a DC bus (DCB1, DCB5, DCB6_1, DCB6_2, DCB7);
   a battery module (BAT1, BAT5, BAT6, BAT7), directly connected to the DC bus;
   a DC coupled charger (DCC1, DCC5_1, DCC5_2, DCC5_3, DCC6, DCC7), coupled to the DC bus, receives the first DC voltage and provides a load power (P_load1, P_load51, P_load52, P_load53) to power a load (EV1, EV5_1, EV5_2, EV5_3, EV6, EV7); and
   a control unit (CU1, CU5, CU6, CU7), coupled to the AC/DC converter, the battery module and the DC coupled charger, and configured to determine an energy of the battery module, and compare the load power with a contracted demand capacity (CDC) to set the AC/DC converter in one of a constant voltage mode (CV), a constant power mode (CP) and a constant voltage-constant power mode (CVP).

2. The DC coupling power system of claim 1, wherein:

   the first DC voltage is maintained at a first voltage level (LV_FC) in the constant voltage mode,
   the supply power is fixed and lower than or equal to the contracted demand capacity in the constant power mode, and
   a voltage level of the first DC voltage is maintained at a second voltage level (LV_COF) and the supply power is fixed and lower than or equal to the contracted demand capacity in the constant voltage-constant power mode.

3. The DC coupling power system of claim 2, wherein when the load power is lower than the contracted demand capacity and the energy of the battery module is equal to a full charge threshold, the control unit controls the AC/DC converter to operate in the constant voltage mode.

4. The DC coupling power system of claim 2, wherein when the load power is lower than the contracted demand capacity and the energy of the battery module is lower than a full charge threshold, or when the load power is higher than or equal to the contracted demand capacity and the energy of the battery module is higher than a discharge threshold, the control unit controls the AC/DC converter to operate in the constant power mode.

5. The DC coupling power system of claim 2, wherein when the load power is higher than the contracted demand capacity and the energy of the battery module is equal to a discharge threshold, the control unit controls the AC/DC converter to operate in the constant voltage-constant power mode.

6. The DC coupling power system of claim 1, wherein the DC bus comprises:

   a first power line (DCB6_1), coupled to the AC/DC converter, the battery module and the DC coupled charger, configured to provide a positive voltage; and
   a second power line (DCB6_2), coupled to the AC/DC converter, the battery module and the DC coupled charger, configured to provide a negative voltage.

7. The DC coupling power system of claim 1, further comprising:

   a solar power generation system (SPG7), coupled to the DC bus, configured to provide a solar power (P_sol); and
   a wind-force power generation system (WPG7), coupled to the DC bus, configured to provide a wind-force power (P_win).

8. The DC coupling power system of claim 1, further comprising a plurality of DC coupled chargers (DCC5_1, DCC5_2, DCC5_3), each of the DC coupled chargers is coupled to the DC bus and receives the first DC voltage to charge a plurality of loads (EV5_1, EV5_2, EV5_3) correspondingly.

9. A control method (300) of a DC coupling power system (100, 500, 600, 700), **characterized by** comprising:

   receiving an AC voltage (VAC1) from an AC power source (PS);
   by an AC/DC converter (ADC1, ADC5, ADC6, ADC7), converting the AC voltage into a first DC voltage (VDC1, VDC5, VDC6, VDC7), and providing the first DC voltage (P_supply) and a supply power to a DC bus (DCB1, DCB5, DCB6_1, DCB6_2, DCB7);
   by a DC coupled charger (DCC1, DCC5_1, DCC5_2, DCC5_3, DCC6, DCC7), receiving the first DC voltage from the DC bus and providing a load power (P_load1, P_load51, P_load52, P_load53) to power a load (EV1, EV5_1, EV5_2, EV5_3, EV6, EV7); and
   by a control unit, determining an energy of a battery module (BAT1, BAT5, BAT6, BAT7), and comparing the load power with a contracted demand capacity (CDC) to set the AC/DC converter in one of a constant voltage mode (CV), a constant power mode (CP) and a constant voltage-constant power mode (CVP).

10. The control method of claim 9, wherein:

    the first DC voltage is maintained at a first voltage level (LV_FC) in the constant voltage mode,
    the supply power is fixed and lower than or equal to the contracted demand capacity in the constant power mode, and
    a voltage level of the first DC voltage is maintained at a second voltage level (LV_COF) and the supply power is fixed and lower than or equal to the contracted demand capacity in the constant voltage-constant power mode.

11. The control method of claim 10, wherein when the load power is lower than the contracted demand capacity and the energy of the battery module is a full charge threshold, controlling the AC/DC converter to operate in the constant voltage mode by the control unit.

12. The control method of claim 10, wherein when the load power is lower than the contracted demand capacity and the energy of the battery module is lower than a full charge threshold, or when the load power is higher than or equal to the contracted demand capacity and the energy of the battery module is higher than a discharge threshold, controlling the AC/DC converter to operate in the constant power mode by the control unit.

13. The control method of claim 10, wherein when the load power is higher than the contracted demand capacity and the energy of the battery module is a discharge threshold, controlling the AC/DC converter to operate in the constant voltage-constant power mode by the control unit.

14. The control method of claim 9, wherein the DC bus comprises a first power line (DCB6_1) and a second power line (DCB6_2), and the control method further comprises:

   by the first power line, providing a positive voltage; and
   by the second power line, providing a negative voltage.

15. The control method of claim 9, further comprising:

   by a solar power generation system (SPG7), providing a solar power (P_sol); and
   by a wind-force power generation system (WPG7), providing a wind-force power (P_win).

Fig. 1

Fig. 2

300

Fig. 3

EP 4 578 719 A1

Fig. 4

EP 4 578 719 A1

500

VAC1
CDC
ADC5
P_supply
VDC5
DCB5

PS

BAT5
CU5
DCC5_1
DCC5_2
DCC5_3

P_load51
P_load52
P_load53

EV5_1
EV5_2
EV5_3

Fig. 5

EP 4 578 719 A1

Fig. 6

Fig. 7

S810

S850

whether the current
period is peak period for
electricity rates

no

control the AC/DC converter to operate
in the constant power mode, and give
priority to charging the battery module

yes

S820

S840

whether the energy
of the battery module reaches the
full charge threshold

no

set the DC voltage to a fixed voltage so
that the battery module BAT1 neither
discharges nor charges

S830

yes

adjust the DC voltage to be lower than
the voltage level corresponding to the
full charge threshold, so that the battery
module discharges to the DC bus

Fig. 8

EP 4 578 719 A1

PS

ADC9

DCB9

AAC1

BAT9

CU9

AAC2

DCC9

EV9

Fig. 9

EP 4 578 719 A1

Europäisches
Patentamt

European
Patent Office

Office européen
des brevets

# EUROPEAN SEARCH REPORT

**Application Number**

EP 24 22 2027

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2021 093788 A (FURUKAWA ELECTRIC CO LTD) 17 June 2021 (2021-06-17) | 1-6,8, 10-14 | INV. B60L53/53 H02J7/00 H02J7/34 H02J7/02 |
| Y | * figure 1 * <br> * paragraphs [0022] - [0035] * <br> ----- | 7,15 | |
| Y | US 2022/085612 A1 (HORII YUSUKE [JP] ET AL) 17 March 2022 (2022-03-17) <br> * paragraph [0054] * <br> ----- | 7,15 | |
| A | JP 2012 253952 A (JFE ENG CORP) 20 December 2012 (2012-12-20) <br> * abstract * <br> ----- | 1-15 | |

**TECHNICAL FIELDS SEARCHED (IPC)**

B60L
H02J

The present search report has been drawn up for all claims

| Place of search | Date of completion of the search | Examiner |
|---|---|---|
| Munich | 7 May 2025 | Berger, Josef |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 22 2027

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2025

| Patent document cited in search report | Publication date | Patent family member(s) | | Publication date |
|---|---|---|---|---|
| JP 2021093788 A | 17-06-2021 | JP | 7189861 B2 | 14-12-2022 |
| | | JP | 2021093788 A | 17-06-2021 |
| US 2022085612 A1 | 17-03-2022 | CN | 114204543 A | 18-03-2022 |
| | | EP | 3971024 A1 | 23-03-2022 |
| | | JP | 7299201 B2 | 27-06-2023 |
| | | JP | 2022050041 A | 30-03-2022 |
| | | US | 2022085612 A1 | 17-03-2022 |
| JP 2012253952 A | 20-12-2012 | NONE | | |

EPO FORM P0459

For more details about this annex : see Official Journal of the European Patent Office, No. 12/82